# EUROPEAN PATENT SPECIFICATION

(11) **EP 0 836 257 B1**
(45) Date of publication and mention of the grant of the patent: **20.02.2008**
(21) Application number: 97250300.7
(22) Date of filing: 13.10.1997
(51) Int. Cl.: H02B 1/04

(54) **Fixing device for electro domestic appliances for applying of an electrical component**
Befestigungsvorrichtung für Elektrohaushaltsgeräte, für Befestigung von einem elektrischen Bauelement
Dispositif de fixation d'appareils domestiques électriques, pour la fixation d'un composant électrique

(30) Priority: 14.10.1996 IT BL960014 U
(43) Date of publication of application: 15.04.1998
(73) Proprietor: D.E.M. S.r.l., 32014 Ponte Nelle Alpi, BL (IT)
(72) Inventor: De Marco, Doreano, 32010 Zoldo Alto (BL) (IT)
(74) Representative: Wablat, Wolfgang

(56) References cited:
- EP-A- 0 293 325
- DE-U- 9 000 781

## Description

The present invention refers to a fixing device for the supporting structure of electrodomestic appliances to apply electrical, electronical or electromechanical components in general, and in particular to a fixing device for electrical anti-disturbance filters.

The innovative characteristic of this device is that of being made up of a pair of guide members integral on the lateral surface of the covering box of the component. The guide members are inserted into specific slots formed in the frame of the electrodomestic appliance or on an intermediate support shaft or bracket, in that the guide members are provided with elastic extremities for positioning and blockage.

Mechanical fixing systems for condensators, pressure operated cut off switches, anti-disturbance filters and other electrical and electromechanical components are well known and are generically provided with a cylindrical covering with an overhanging threaded tongue from one of the two extremities. The tongue is fixed by specific openings in the supporting structure by means of a blockage nut.

These systems present problems when releasing the nut in the case of vibrating electrodomestic appliances and requires longer time to unscrew the nut. That has a negative effect on the industrial assembly costs.

According to recent techniques the threaded tongue of the components is substituted by a flexible sheet formed on the central surface of the "U" fixing structure which is integral formed with the head section of the cylindrical covering of the same component. The metal sheet is positioned parallel to the end plane of the component to be fixed, and is made elastic by means of an opportune pair of channel outlets formed in the central surface of the "U" structure.

The sheet is inserted in the slot tracks grooved on the surface or frame of the electrodomestic appliance with the possibility of blockage by means of an opportune prominence on the same sheet and which is inserted in a similar slot on the supporting frame.

This new technique undoubtedly overcomes many of the previous technical problems, ensuring a swift fixing and the elimination of consequent stability problems and any possible vibrations.

However, not even this new technique completely satisfies the necessities of the industrial assembly of condensators, filters and other electrical, electronic or electromechanical components to the structure of normal electrodomestic appliances, in that the "U" structure, from which the fixing tab is grooved, occupies the entire surface of the protective covering box, making it unusable for any connecting applications on that side of the covering box.

Furthermore, the realisation and moulding of the support of the tab and its application to the end plane of the covering of the electrical and electromechanical component is rather difficult and subject to frequent breakage, in that its resistance is limited to the depth of the channel outlets that generate it and which determine its elasticity.

This technique is not an advantage, in that it effects an orthogonal position and therefore maximum encumbrance of the component in respect to the fixing surface; whereas less encumbrance is in its parallel positioning to the same surface.

EP 0 293 325 discloses a fixing assembly according to the preamble of claim 1.

The objective of the present invention is to enable the application of the component within its normal protective covering box, that is generally cylindrical, so that the same covering box can be placed parallel and with maximum vicinity to the support surface - and at the same time being applicated with maximum rapidity and stability without the use of fixing screws.

Another objective of this invention is to make sure the connection of the component to be applied, so that its guide members guarantee a correct and stable position.

Another objective is that of effecting a stable fixing, that is also easy to move in case of substitution or repairing of the component.

This invention also enables the inter-positioning of the component and the support frame by means of a shaft (bracket) which permits any connection of the "faston" type for its earthing and the earthing of the entire electrodomestic appliance, on which the component is applied.

These and other objectives are perfectly attainable with this said device, as one may infer from the following description of one of its constructive solutions, which is purely indicative and not limited, and which is illustrated in some of the schematic drawings reproduced in the enclosed charts, those being:
Fig. 1 represents a perspective view of an anti-disturbance filter or of another electric component to be applied to a normal electrodomestic appliance, in that its covering box is associated to the larger piece of the supporting frame, which is also represented. This figure does not represent an embodiment of the invention but an example useful for understanding the invention.
Fig. 2 represents the frontal view of the component and of the larger piece of the structure, which corresponds to fig. 1 during the first phase of their connection.
Fig. 3 represents a frontal view of the component and of the larger piece of the structure, similar to fig. 2 but in the final assembly position.
Fig. 4 represents a first constructive variant of the device. This figure does not represent an embodiment of the invention but an example useful for understanding the invention.
Fig.5 represents an axial section view, according to line V - V of fig. 6.
Fig. 6 represents a frontal view of an overlaying shaft (bracket) between the component to be applied and the supporting frame, i. e. a particularly valid example when earthing the electrical appliance including the said component .
Fig. 7 represents a frontal view of the bracket of fig. 6, applied to a similar component as the component in fig. 1.
Fig. 8 represents a lateral view of the same bracket connected to the component in fig. 7.
Fig. 9 represents a view from above in accordance with line IX - IX of fig. 7, of the component connected with the bracket.

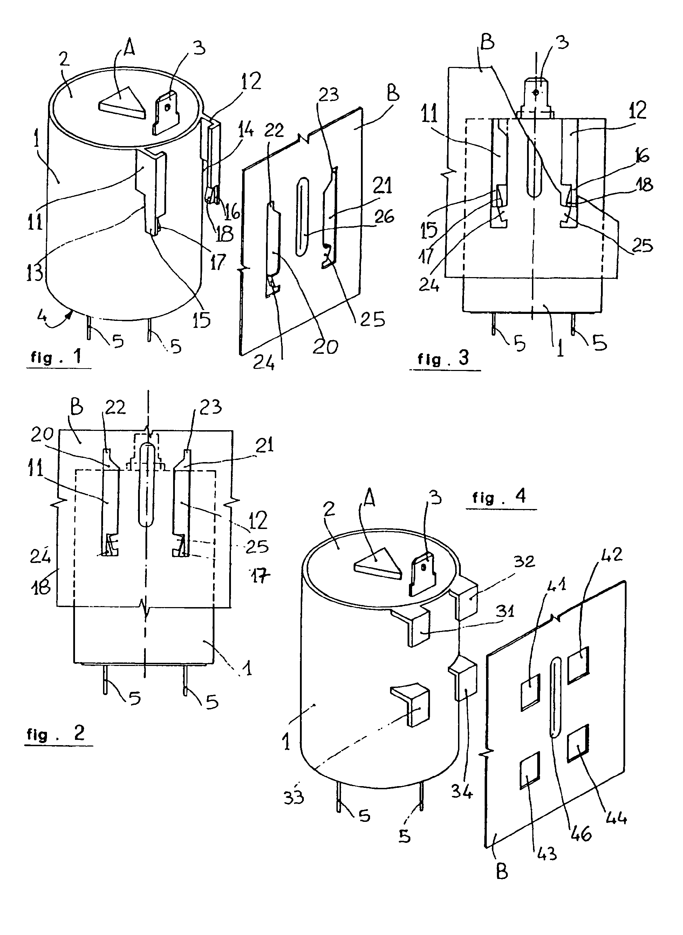

As seen in fig. 1 an electrical, electronic or electromechanical component, for example an anti-disturbance filter A to be applied to the supporting frame B of a normal electrodomestic appliance, is supplied with a normal protective covering, cylindrical covering box or an other form depending on the usual technique.

The said covering box 1 includes an end plate 2. One or more connectors 3 of the "faston" type and an opposite end plate 4 with one or more electric cables 5 are connected to the internal component of the covering box 1.

The characteristic of the covering box 1 is that it is provided with a pair of guide members 11 and 12 that are overlaying an "L" form in an axial position and provided with inferior shoulders (recesses) 13 and 14 which make the extremities (inferior parts) 15 and 16 sufficiently elastic.

The internal side of the extremities 15 and 16 is provided with a check or an inclined insert 17 and 18, while the free side of every guide member 11 and 12 is cut at the opportune height to favour and regulate the elasticity of the extremities 15 and 16.

On side B of the electrodomestic appliance structure in proximity of the support of the component of covering box 1, one finds the groove of double slot tracks 20 and 21 identical to the guide members 11 and 12.

In more detail the slot tracks 20 and 21 are completed with upper openings 22 and 23 and folds 24 and 25 of the sheet (folded sheets) on the inferior part. As seen in fig. 2, the folds 24 and 25 are outlined in a way to enable a transverse passage of the extremities 15 and 16 and of the respective checks 17 and 18, while the slot tracks 20 and 21 enable the passage of the free side of the guide members 11 and 12.

With reference to fig. 2, one may understand, that the connection of the component A of the structure B is made possible by putting the guide members 11 and 12 in the respective slot tracks 20 and 21, so that the inclined inserts 17 and 18 have their inclined surface in an inferior position to the inclined surface of the folds 24 and 25.

When this operation has been done it is sufficient to lift the covering box 1, so that the superior fittings of the guide members 11 and 12 then fit into their restricted openings 22 and 23 of the B side.

With this axial translation of the covering box 1 one gets the sliding of the inclined wall of the inserts 17 and 18 on the inclined parts of the folds 24 and 25. Consequential, one has the flexibility of the extremities 15 and 16, until the same extremities 15 and 16 have not passed the maximum point of the folds 24 and 25.

In that moment, as represented in fig.3, one gets the return of the same extremities 15 and 16 to their normal linear position, with the consequential rest bearing of the inserts 17 and 18 on the superior rim of the folds 24 and 25.

The said rest bearing ensures the stable support of the covering box 1 in a parallel position to that of the support side B with the maximum security of stability and minimum encumbrance, which conforms to one of the objectives specified.

The device in question is completed with the presence of the boss 26, which has the evident objective of eliminating every possibility of transverse slack between the covering box 1 and the side B.

With reference to fig. 4. it is evident that according to the constructive variation, one may get a simplification of the device by making a covering box 1 with a bayonet type clutch by means of four angled brackets 31, 32, 33 and 34 to be fitted in the openings 41, 42, 43 and 44 of the side B and then to be pushed down even by their own weight and to remain supported in this way by the side B. A camber 46 may eliminate any slack between the covering box 1 and side B, reducing to a minimum any possibility of unthreading (slipping out).

This example is naturally reductive and simplified from the previous one illustrated and may be used in economical forms for components A destined to be positioned vertically and supplied with sufficient weight for their stable linkage.

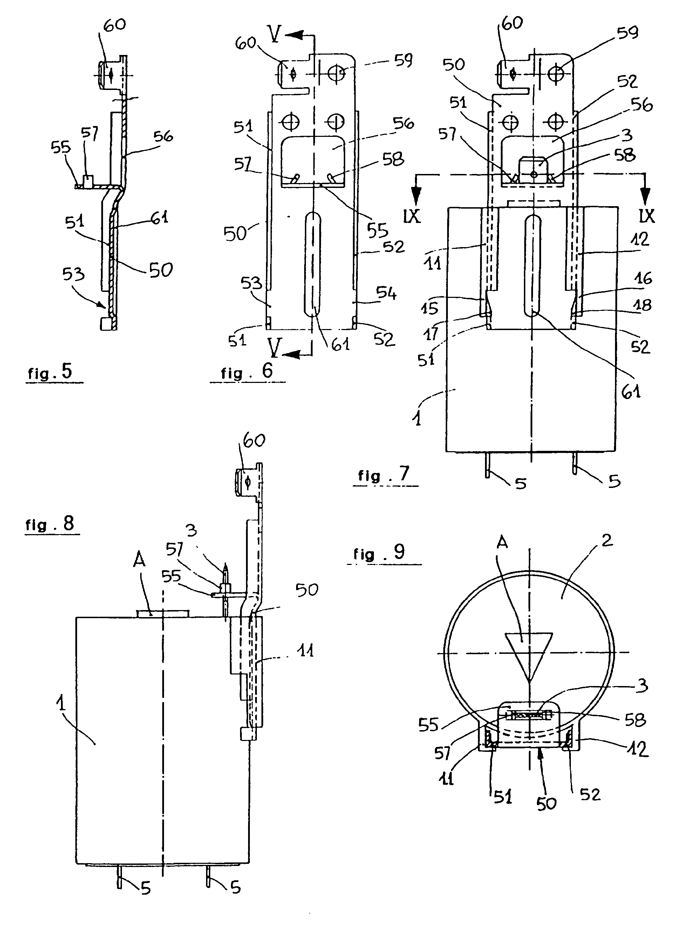

The device in question enables the fixing of the components A provided with a covering box 1 with the guide members 11 and 12 similar to those seen in fig.1 and also those with intermediate brackets which then can be fixed to the structure of the electrodomestic appliance as represented in the various drawings of fig. 5 to 9.

With particular reference to the figures 5 and 6 a bracket 50 is provided with folded rims 51 and 52, in which are formed the openings 53 and 54.

The same bracket 50 has an earthing clip 55 preferentially formed by the trimming on three sides of the opening 56 and of its successive fold on the inferior side.

The earthing clip 55 is provided with two contact reeds 57 and 58 with a passing intermediate opening.

The superior part of the bracket 50 may be adapted to various requirements. According to the illustrated solutions in the figures 5 to 9 a series of openings 59 facilitates the fixing to the support wall, while a "faston" extremity 60 permits the earthing also of the entire electrodomestic appliance, which conforms to another of the objectives specified.

With reference to the figures 7 and 9, the covering box 1 is connected to the bracket 50 by putting the folded rims 51 and 52 of the same bracket 50 between the overlaying guide members 11 and 12, until the inserts 17 and 18 do not fit into the openings 53 and 54 of the rims 51 and 52, after having retracted the extremities 15 and 16 of the same guide members 11 and 12. A boss 61 on the bracket 50 enhances its stability and adherence to the covering box 1.

The fixing of the bracket 50 to the covering box 1 also ensures the contact of the contact reeds 57 and 58 with the plug 3 for the earthing of the component enclosed in the covering box 1, conforming to another objective specified.

Of course, the superior part of the bracket 50 may take on any form to adapt itself to specific conditions of fixing the structure to the electrodomestic appliance, as it could be positioned in another part of the bracket 50, or it could be totally absent, if the bracket 50 were grooved in length of the normal supporting structure of the electrodomestic appliance.

## Claims

1. Fixing assembly for applying an electrical component (A), in particular an anti-disturbance filter to a supporting structure of a domestic appliance,
comprising:
- a covering box (1) for containing the electrical component (A) and provided with a pair of L-shaped guide members (11, 12) arranged axially and in parallel, and integrally formed with a lateral surface of said covering box (1),
- a bracket (50) provided with folded rims (51, 52) whereby the bracket (50) is connected to the covering box (1);
**characterized in that**
- said guide members (11/12) having inferior elastic extremities (15, 16) provided with inclined inserts (16, 18);
- the folded rims (51, 52) have openings (53, 54) for containing the inclined inserts (17, 18) of the guide members (11, 12);
- the bracket (50) is connected to the covering box (1) by putting the folded rims (51, 52) between the overlaying guide members (11, 12) until the inserts (17, 18) fit into the openings (53, 54) of the rims (51, 52);
- the bracket (50) comprises openings (59) or other fixing elements for fixing the bracket (50) to the supporting structure of the domestic appliance;
- the bracket (50) comprises an extremity (60) for earthing of the domestic applicance; and
- the bracket (50) comprises an earthing clip (55) to ensure the contact with a terminal of earthing of component (A).

2. Fixing assembly according to claim 1, **characterised in that** the earthing clip (55) is folded from an opening (56) of the bracket (50).

3. Fixing assembly according to claim 2, **characterised in that** the earthing clip (55) comprises two contact reeds (57, 58), ensuring the contact with a connector (3).

## Patentansprüche

1. Befestigungsbaugruppe zum Befestigen eines elektrischen Bauelements (A), insbesondere eines Entstörfilters, an einer Tragkonstruktion eines Haushaltsgeräts, umfassend:
- ein Abdeckgehäuse (1) zum Aufnehmen des elektrischen Bauelements (A) und versehen mit einem Paar von L-förmigen Führungsgliedern (11, 12), die axial und parallel angeordnet und einstückig mit einer seitlichen Oberfläche des Abdeckgehäuses (1) ausgebildet sind,
- eine Konsole (50), die mit abgekanteten Rändern (51, 52) versehen ist, wodurch die Konsole (50) mit dem Abdeckgehäuse (1) verbunden ist;
**dadurch gekennzeichnet, dass**
- die Führungsglieder (11/12) untere elastische Enden (15, 16) aufweisen, die mit geneigten Einsätzen (17, 18) versehen sind;
- die abgekanteten Ränder (51, 52) Öffnungen (53, 54) zum Aufnehmen der geneigten Einsätze (17, 18) der Führungsglieder (11, 12) aufweisen;
- die Konsole (50) durch Anordnen der abgekanteten Ränder (51, 52) zwischen den überstehenden Führungsgliedern (11, 12), bis die Einsätze (17, 18) in die Öffnungen (53, 54) der Ränder (51, 52) passen, mit dem Abdeckgehäuse (1) verbunden wird;
- wobei die Konsole (50) Öffnungen (59) oder andere Befestigungselemente zum Befestigen der Konsole (50) an der Tragkonstruktion des Haushaltsgeräts umfasst;
- wobei die Konsole (50) ein Ende (60) zum Erden des Haushaltsgeräts umfasst; und
- wobei die Konsole (50) einen Erdungsbügel (55) umfasst, um den Kontakt mit einer Erdungsklemme des Bauelements (A) sicherzustellen.

2. Befestigungsbaugruppe nach Anspruch 1, **dadurch gekennzeichnet, dass** der Erdungsbügel (55) von einer Öffnung (56) der Konsole (50) weg abgekantet ist.

3. Befestigungsbaugruppe nach Anspruch 2, **dadurch gekennzeichnet, dass** der Erdungsbügel (55) zwei Kontaktzungen (57, 58) umfasst, die den Kontakt mit einem Verbinder (3) sicherstellen.

## Revendications

1. Ensemble de fixation pour appliquer un composant électrique (A), en particulier un filtre antiparasites, sur une structure de support d'un appareil domestique, comprenant :
- une boîte de couverture (1) pour contenir le composant électrique (A) et dotée d'une paire d'éléments de guidage et en forme de L (11, 12) agencés axialement et en parallèle, et formés intégralement avec une surface latérale de ladite boîte de couverture (1) ;
- une platine (50) dotée de rebords repliés (51, 52), ladite platine (50) étant connectée à la boîte de couverture (1);
**caractérisé en ce que** :
- lesdits éléments de guidage (11, 12) possèdent des extrémités élastiques inférieures (15, 16) dotées d'inserts inclinés (17, 18) ;
- les rebords repliés (51, 52) possèdent des ouvertures (53, 54) pour contenir les inserts inclinés (17, 18) des éléments de guidage (11, 12) ; et
- la platine (50) est connectée à la boîte de couverture (1) en plaçant les rebords repliés (51, 52) entre les éléments de guidage (11, 12) en recouvrement jusqu'à ce que les inserts (17, 18) se logent dans les ouvertures (53, 54) des rebords (51, 52) ;
- la platine (50) comprend des ouvertures (59) ou d'autres éléments de fixation pour fixer la platine (50) sur la structure de support de l'appareil domestique ;
- la platine (50) comprend une extrémité (60) pour la mise à la terre de l'appareil domestique ; et
- la platine (50) comprend une pince de mise à la terre (55) pour assurer le contact avec une borne de mise à la terre du composant (A).

2. Ensemble de fixation selon la revendication 1, **caractérisé en ce que** la pince de mise à la terre (55) est repliée depuis une ouverture (56) de la platine (50).

3. Ensemble de fixation selon la revendication 2, **caractérisé en ce que** la pince de mise à la terre (55) comprend deux languettes de contact (57, 58) assurant le contact avec un connecteur (3).
